(19) Europäisches Patentamt
European Patent Office
Office européen des brevets

(11) **EP 4 208 394 B1**

(12) **EUROPÄISCHE PATENTSCHRIFT**

(45) Veröffentlichungstag und Bekanntmachung des Hinweises auf die Patenterteilung:
**25.12.2024  Patentblatt 2024/52**

(21) Anmeldenummer: **21773724.6**

(22) Anmeldetag: **06.09.2021**

(51) Internationale Patentklassifikation (IPC):
**B65D 65/40** *(2006.01)*    **B65B 7/16** *(2006.01)*
**B65B 9/04** *(2006.01)*    **B65B 9/10** *(2006.01)*
**B65D 75/26** *(2006.01)*    **B65D 77/20** *(2006.01)*

(52) Gemeinsame Patentklassifikation (CPC):
**B65D 75/26; B65D 65/40; B65 77/2024**

(86) Internationale Anmeldenummer:
**PCT/EP2021/074507**

(87) Internationale Veröffentlichungsnummer:
**WO 2022/049289 (10.03.2022 Gazette 2022/10)**

(54) **VERPACKUNG MIT PAPIERMATERIAL**

PACKAGING WITH PAPER MATERIAL

EMBALLAGE AVEC MATÉRIAU EN PAPIER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.09.2020   DE 102020123123**

(43) Veröffentlichungstag der Anmeldung:
**12.07.2023   Patentblatt 2023/28**

(73) Patentinhaber:
• **MULTIVAC Sepp Haggenmüller SE & Co. KG**
**87787 Wolfertschwenden (DE)**
• **Koehler Innovation & Technology GmbH**
**77704 Oberkirch (DE)**

(72) Erfinder:
• **MÜLLER, Jens**
**88214 Ravensburg (DE)**
• **RUHLAND, Reinhard**
**87730 Bad Grönebach (DE)**
• **SCHULTE, Marius**
**77704 Oberkirch (DE)**
• **JURISCH, Claus**
**77654 Offenburg (DE)**
• **KIND, Christian**
**76532 Baden-Baden (DE)**
• **HOFERER, Dominik**
**77794 Lautenbach (DE)**
• **FÖLL, Aljoscha**
**77767 Appenweier (DE)**

(74) Vertreter: **Grünecker Patent- und Rechtsanwälte PartG mbB**
**Leopoldstraße 4**
**80802 München (DE)**

(56) Entgegenhaltungen:
EP-A1- 3 278 972        WO-A1-2018/109448
DE-A1- 102010 021 027    DE-A1- 102016 201 498

EP 4 208 394 B1

**Beschreibung**

Die Erfindung betrifft eine Verpackung für ein Produkt unter Verwendung eines beschichteten Papiermaterials.

Eine Verpackung bezeichnet im Allgemeinen die Hülle bzw. (die partielle oder vollständige) Umhüllung eines Objektes oder Produkts, insbesondere zu dessen Schutz oder zur besseren Handhabung. Folglich umfasst ein Verpackungsmaterial das Material, das eine solche Verpackung oder einen Teil der Verpackung bildet.

Verpackungsmaterialien können beispielsweise auf Basis von Papier, Kunststoffen und/oder Metallen aufgebaut sein. Die vorliegende Erfindung befasst sich mit Verpackungsmaterialien auf Basis von Papier.

Verpackungsmaterialien auf Basis von Papier sind grundsätzlich bekannt. Allerdings ist bis heute noch kein Faserstoff-/Papier-basiertes flexibles Verpackungsmaterial bekannt, das sich zur Verpackung von oxidationsempfindlichen, feuchten und fetthaltigen Objekten, insbesondere Nahrungsmitteln, eignet und gleichzeitig frei von halogenhaltigen Verbindungen oder Sperrschichten aus Aluminium, $Al_2O_3$ und/oder $SiO_2$ ist, die außerhalb einer Papierstreichmaschine mittels Laminierung oder Gasphasenabscheidung aufgebracht werden müssen.

Bekannte Verpackungsmaterialien beinhalten häufig Verbindungen wie Polyvinylidenchlorid (PVDC; halogenhaltig), weisen eine verbesserungswürdige Reißfestigkeit auf, was zu Laufproblemen auf Verpackungsanlagen führen kann, und sind zudem aufgrund eines zu hohen Beschichtungsanteils über den Papierstrom nicht recycelbar. Ferner weisen bekannte Verpackungsmaterialien eine zu hohe Durchlässigkeit für Wasser, Wasserdampf, Sauerstoff und Fett auf und führen damit zu einer geringen Haltbarkeit des verpackten Produkts.

Aus der WO 2018/109448 A1 geht ein Verfahren zum Herstellen einer Verpackung hervor, bei dem ein faseriges Material (wie beispielsweise Papier) mit einem ggf. mehrlagigen Gasbarrierefilm beschichtet wird. Die Dokumente DE102016201498A1, EP3278972A1 und DE102010021027A1 offenbaren weitere Verpackungen.

Aufgabe der vorliegenden Erfindung ist es, eine verbesserte Verpackung zur Verfügung zu stellen, die insbesondere für ein Verpacken verderblicher Lebensmittel geeignet ist.

Diese Aufgabe wird durch eine Verpackung gemäß Anspruch 1 gelöst, d. h. durch eine Verpackung, die gasdicht ist und zumindest abschnittsweise ein beschichtetes Papier aufweist, umfassend ein Basispapier und mindestens drei darauf aufgebrachte Beschichtungen, wobei die mindestens drei Beschichtungen ausgehend von dem Basispapier in dieser Reihenfolge eine erste Barriereschicht, umfassend mindestens ein hydrophobes Polymer, eine zweite Barriereschicht, umfassend mindestens ein hydrophiles Polymer und eine dritte Barriereschicht, umfassend mindestens ein hydrophobes Polymer, umfassen.

Ein derart beschichtetes Papier zeichnet sich insbesondere dadurch aus, dass es sich besonders gut als Verpackungsmaterial für oxidationsempfindliche, feuchte und fettige Objekte, insbesondere Nahrungsmittel, eignet und bei Bedarf sogar zur Herstellung von Verpackungen mittels Ultraschall- oder Heißsiegelanwendung verwendet werden kann. Ferner kann ohne Nachteile auf Haftvermittler zwischen den einzelnen Schichten verzichtet werden und es müssen keine Barriereschichten auf Basis von halogenhaltigen Verbindungen, Aluminium, $Al_2O_3$ und/oder $SiO_2$ vorhanden sein.

Ein derartiges beschichtetes Papier lässt sich ferner relativ einfach und mit geringen Auftragsgewichten herstellen.

Im Folgenden soll der Begriff "umfassen" auch "bestehend aus" bedeuten.

Als "hydrophob" werden Substanzen bezeichnet, die sich nicht mit Wasser mischen lassen. Als "hydrophil" werden Substanzen bezeichnet, die sich mit Wasser mischen lassen. Hydrophobe Polymere werden auch als unpolare Polymere und hydrophile Polymere auch als polare Polymere bezeichnet.

Hydrophobizität bzw. Hydrophilität kann beispielsweise über den logP-Wert definiert werden. Der n-Octanol-Wasser-Verteilungskoeffizient $K_{ow}$ (auch Schreibweisen wie Octanol/Wasser-Verteilungskoeffizient sind gebräuchlich und korrekt) ist ein dem Fachmann bekannter dimensionsloser Verteilungskoeffizient, der das Verhältnis der Konzentrationen einer Chemikalie in einem Zweiphasensystem aus n-Octanol und Wasser angibt und damit ein Maß für die Hydrophobizität bzw. Hydrophilität eines Stoffes ist. Der logP-Wert ist der dekadische Logarithmus des n-Octanol-Wasser-Verteilungskoeffizienten $K_{ow}$. Dabei gilt:

$$K_{ow} = P = \frac{c_0^{Si}}{c_w^{Si}} \qquad \text{und} \qquad \log P = \log \frac{c_0^{Si}}{c_w^{Si}} = \log c_o^{Si} - c_w^{Si}$$

mit $c_o^{Si}$ = Konzentration einer Chemikalie in der octanolreichen Phase und $c_w^{Si}$ = Konzentration einer Chemikalie in der wasserreichen Phase.

$K_{ow}$ ist größer als eins, wenn eine Substanz besser in fettähnlichen Lösungsmitteln wie n-Octanol löslich ist, kleiner als eins, wenn sie besser in Wasser löslich ist. Entsprechend ist log P positiv für hydrophobe/lipophile und negativ für hydrophile/lipophobe Substanzen.

In Folgenden werden bevorzugte Ausführungen des beschichteten Papiers beschrieben:
Beschichtetes Papier, wobei die erste Barriereschicht Stoffe enthält oder daraus besteht, die ausgewählt sind aus der Gruppe lipophile Stoffe, Paraffine, insbesondere Hartparaffine, Wachse, insbesondere mikrokristalline Wachse, Wachse auf Basis von pflanzlichen Ölen oder Fetten, Wachse auf Basis von tierischen Ölen oder Fetten, pflanzliche Wachse, tierische Wachse, niedermolekulare Polyolefine, Polyterpene und deren Mischungen.

Beschichtetes Papier, wobei durch die zweite Barriereschicht der Übergang von Stoffen, insbesondere von hydrophoben Stoffen, verringert oder verhindert ist.

Beschichtetes Papier, wobei der Übergang von Stoffen, insbesondere von hydrophoben Stoffen, aus der ersten Barriereschicht oder durch die erste Barriereschicht, in die dritte Barriereschicht oder darüber hinaus verringert oder verhindert ist.

Beschichtetes Papier, wobei der Übergang von Stoffen, insbesondere von hydrophoben Stoffen, aus der dritten Barriereschicht oder durch die dritte Barriereschicht, in die erste Barriereschicht verhindert ist.

Beschichtetes Papier, wobei der Übergang von Stoffen, die ausgewählt sind aus der Gruppe lipophile Stoffe, Paraffine, insbesondere Hartparaffine, Wachse, insbesondere mikrokristalline Wachse, Wachse auf Basis von pflanzlichen Ölen oder Fetten, Wachse auf Basis von tierischen Ölen oder Fetten, pflanzliche Wachse, tierische Wachse, niedermolekulare Polyolefine, Polyterpene und deren Mischungen verringert oder verhindert ist.

Der Übergang von diesen Stoffen kann insbesondere durch geeignete Art und Menge des mindestens einen hydrophilen Polymers der zweiten Barriereschicht verringert oder verhindert werden.

Beschichtetes Papier, wobei die dritte Barriereschicht bis auf unvermeidliche oder zulässige Verunreinigungen frei von Stoffen ist, die nicht für den direkten Lebensmittelkontakt zugelassen sind, insbesondere von Stoffen, die ausgewählt sind aus der Gruppe lipophile Stoffe, Paraffine, insbesondere Hartparaffine, Wachse, insbesondere mikrokristalline Wachse, Wachse auf Basis von pflanzlichen Ölen oder Fetten, Wachse auf Basis von tierischen Ölen oder Fetten, pflanzliche Wachse, tierische Wachse, niedermolekulare Polyolefine, Polyterpene und deren Mischungen.

Hartparaffine, insbesondere natürlicher Herkunft oder synthetische, mikrokristalline Wachse, niedermolekulares Polypropylen, natürliche Wachse, niedermolekulare Polyolefine, Polyterpene und deren Mischungen sind insbesondere solche, die in BfR XXV. vom 01.06.2019 (Bundesinstitut für Risikobewertung des Bundesministeriums für Ernährung und Landwirtschaft Deutschland) oder in den jeweiligen Fassungen definiert sind.

Dadurch wird a) verhindert, dass diese Stoffe in die dritte Barriereschicht übergehen und/oder aus der dritten Barriereschicht nach außen übergehen insbesondere in ein Kontaktmaterial, insbesondere in Kontakt mit fetthaltigen Lebensmitteln und b) dass durch das Verringern oder Verhindern des Übergangs dieser Stoffe die Barriereeigenschaften der Schichten, insbesondere der der ersten, zweiten und/oder dritten Barriereschicht erhalten bleiben bzw. ansonsten durch einen Übergang von diesen Stoffen sich verändern oder ganz verloren gehen, c) dass Stoffe aus dem Kontaktmaterial in die erste Barriereschicht übergeben und/oder die erste Barriereschicht dadurch verändern.

Das in dem beschichteten Papier verwendete Basispapier ist prinzipiell nicht beschränkt. Unter den Begriff "Basispapier" fällt jegliches Papiermaterial, einschließlich Karton oder Pappe.

Es ist bevorzugt, dass das Basispapier ein Flächengewicht von 20 bis 120 g/m$^2$, vorzugsweise von 40 bis 100 g/m$^2$, aufweist.

Ferner ist es bevorzugt, dass das Papier eine Zusammensetzung mit einem Langfaseranteil von 10 bis 80%, bevorzugt von 20 bis 50%, und einem Kurzfaseranteil von 20 bis 90 Gew.-%, bevorzugt von 50 bis 80 Gew.-%, aufweist.

Unter Langfaser wird eine Faser mit einer Faserlänge von 2,6 bis 4,4 mm und unter Kurzfaser eine Faser mit einer Faserlänge von 0,7 bis 2,2 mm verstanden.

Zudem können 0 bis 20%, vorzugsweise 0 bis 5% an Füllstoffen, wie GCC, das beispielsweise unter dem Handelsnamen Hydrocarb 60 oder Hydroplex 60 bekannt ist, PCC, das beispielsweise unter dem Handelsnamen PreCarb 105 bekannt ist, natürliches Kaolin und/oder Talkum, sowie übliche Hilfsstoffe, wie Retentionsmittel und/oder Leimungsmittel, enthalten sein.

Der Vorteil eines solchen Basispapiers ist zum Einen seine hohe Flexibilität und zum Anderen seine gute Verarbeitbarkeit auf bestehenden Verpackungsanlagen, die Aufrechterhaltung der hohen Maschinenverfügbarkeit und die Erzielung der notwendigen Durchstoßfestigkeit.

Dank der Sperrwirkung des beschichteten Papiers für den Durchtritt von Sauerstoff bietet die erfindungsgemäße Verpackung besondere Vorteile im Hinblick auf das Verpacken von Produkten, die entweder besonders oxidationsempfindlich sind oder aber gezielt unter einer Atmosphäre mit besonders hohem Sauerstoffgehalt verpackt werden, um ihre Haltbarkeit zu verlängern. Beiden Fällen ist gemeinsam, dass die Verpackung einen hohen Gradienten in der Sauerstoffkonzentration im Verhältnis zur Umgebung der Verpackung über einen vergleichsweise langen Zeitraum aufrechterhalten kann. Aus diesem Grund eignet sich die Verpackung besonders gut, wenn ein Sauerstoffgehalt einer Atmosphäre in einem Innenraum der Verpackung entweder sehr niedrig ist, beispielsweise unter 3 % liegt oder sogar maximal 2 % beträgt, oder wenn umgekehrt der Sauerstoffgehalt der Atmosphäre im Innenraum der Verpackung sehr hoch ist - beispielsweise über 60 % beträgt oder sogar 70 % und mehr. Beide Bereiche unterscheiden sich stark vom Sauerstoffgehalt in üblicher Umgebungsluft, der typischerweise ca. 20,95 % beträgt.

Um die Sperrwirkung für den Durchtritt von Gasen zu unterstützen, ist die Verpackung vorzugsweise mittels wenigstens einer Siegelnaht gasdicht geschlossen. An dieser Siegelnaht sind Verpackungsmaterialien miteinander verschmolzen.

Eine erste Variante besteht darin, dass die Verpackung lediglich das erste Verpackungsmaterialstück aufweist und dieses mit sich selbst versiegelt ist, beispielsweise nach einem Zurückfalten des Verpackungsmaterialstücks auf sich selbst. Diese Verpackungen, die beispielsweise auf einer Schlauchbeutelverpackungsmaschine oder einer Kammerverpackungsmaschine (einschließlich sogenannter Kammer-Band-Maschinen) hergestellt sein können, sind besonders einfach herstellbar, da sie besonders wenige Siegelnähte erfordern.

In einer zweiten Variante umfasst die Verpackung zusätzlich zum ersten Materialstück ein zweites Verpackungsmaterialstück, wobei die beiden Verpackungsmaterialstücke miteinander versiegelt sind. Das zweite Verpackungsmaterialstück kann dabei entweder ein Kunststoffmaterial aufweisen, insbesondere ein tiefziehbares Kunststoffmaterial (wie beispielsweise Polyurethan, PU). Alternativ weist das zweite Verpackungsmaterialstück ein ebensolches beschichtetes Papier auf wie das erste Verpackungsmaterialstück.

Die Verpackungen der Variante mit einem ersten und einem zweiten Verpackungsmaterialstück können beispielsweise auf einer Schalenversiegelungsmaschine (Traysealer) oder auf einer Tiefziehverpackungsmaschine hergestellt sein. Das erste Verpackungsmaterialstück mit dem beschichteten Papier kann dabei entweder als die Schale oder als Deckel zum Verschließen einer Schale verwendet werden.

Vorzugsweise ist beim ersten Verpackungsmaterialstück bzw. beim zweiten Verpackungsmaterialstück (sofern vorhanden) die mit den Beschichtungen versehene Seite des Basispapiers dem Innenraum der Verpackung zugewandt. Alternativ ist es jedoch auch denkbar, dass die Seite des Basispapiers, auf der die Beschichtungen aufgebracht sind, vom Innenraum der Verpackungen abgewandt ist.

Die erste Barriereschicht umfasst mindestens ein hydrophobes Polymer. Diese Barriereschicht dient vorzugsweise als Barriereschicht für Wasserdampf und schützt damit das verpackte Produkt vor dem Austrocknen. Außerdem dient sie zum Schutz der hydrophilen Barriere vor Feuchtigkeit, da diese nur in trockenem Zustand ihre volle Wirkung entfalten kann.

Das mindestens eine hydrophobe Polymer umfasst vorzugsweise ein Polymer auf Basis eines Polyacrylats und/oder eines Polyolefins. Als geeignete Polymere sind insbesondere Polymethylacrylate, Polymethylmethacrylate, Polyethylarylate, Polyethylmethacrylate, Poly(n-, iso-, tert.-)butylacrylate, Poly(n-, iso-, tert.-)butylmethacrylate, Polycyclohexylmethacrylate, Polyethylhexylacrylate und deren Copolymere, Pfropfpolymere, sowie Copolymere mit Styrol, Acrylnitril, Methylstyrol oder Vinyltoluol, Styrol-Butadien-Copolymere), Polyvinylacetate (auch teilverseift), Polyester, Polyamide, Polyurethane, Polyether, Polyethylenimine, und/oder Polyvinylamide zu nennen.

Zusätzlich zu dem hydrophoben Polymer kann auch ein Wachs vorhanden sein. Geeignete Wachse umfassen Verbindungen wie Paraffine oder natürliche Mischungen oder Reinstoffe kurzbis mittelkettiger Kohlenwasserstoffverbindungen, die umgangssprachlich als "Wachse" bezeichnet werden. Geeignete Wachse sind z.B. Heneicosan, Docosan, Tricosan, Tetracosan, Pentacosan, Hexacosan, Heptacosan, Octacosan, Nonacosan, Triacontan, Hentriacontan, Dotriacontan, Tritriacontan, Tetratriacontan, Pentatriacontan, Hexatriacontan, Heptatriaontan, Octatriacontan, Nonatriacontan; Montanwachse, natürliche Wachse (Carnaubawachs, Bienenwachs, Candelillawachs), durch Hydrierung oder Teilhydrierung von Pflanzenölen und tierischen Ölen oder Fetten hergestellte Wachse, sowie Metallseifen, wie z.B. Ca-Stearat.

Geeignete Polymere und Polymer-/Wachsgemische sind insbesondere unter den Handelsnamen CHT Coat 230, Vapor Coat 2200, Vapor Coat 1300, BimBA 8510, BimBA 8888, Cartaseal VWF, Cartaseal SWF, Sealcoat SL251, Rhobarr 320, B-Coat SP1, B-Coat WB 100, B-Coat 50/3, Chemipearl S300, Ultraseal W-951, Ultraseal W-952, Ukaphob HR 530, Induprint SE 2555, Wükoseal 630, Extomine BG-EM 52%, EurikaCoat 3624, Aquacer 1061 und Epotal SP 106 bekannt.

Das mindestens eine hydrophobe Polymer ist in der ersten Barriereschicht vorzugsweise in einer Menge von 1 bis 100 Gew.-%, besonders bevorzugt von 50 bis 99,5 Gew.-% oder 50 bis 100 Gew.-%, bezogen auf das Gesamtgewicht der ersten Barriereschicht, enthalten.

Bevorzugt ist die erste Barriereschicht als Ganzes hydrophob.

Die erste Barriereschicht kann ferner Additive, wie Verdicker, z.B. acrylatbasierte Verdicker, Tenside, z.B. Sulfosuccinate, Dehnrheologiehilfsmittel, z.B. Polyacrylamide, Carboxymethylcellulose, Polyvinylalkohole, und/oder Vernetzungsmittel, wie Aldehyde und mehrwertige Aldehyde, Zirconate, mehrwertige Epoxide, Epichlorhydrinharze und/oder Hydrazide enthalten.

Diese Additive sind vorzugsweise jeweils in einer Menge von 0,1 bis 1 Gew.-%, bezogen auf das Gesamtgewicht der ersten Barriereschicht, enthalten.

Die Auftragsmenge der ersten Barriereschicht beträgt vorzugsweise 1 bis 20 $g/m^2$ und besonders bevorzugt 5 bis 10 $g/m^2$. Die Menge bezieht sich auf die getrocknete erste Barriereschicht in dem finalen Produkt.

Die zweite Barriereschicht umfasst mindestens ein hydrophiles Polymer. Diese Barriereschicht dient vorzugsweise als Barriereschicht für Sauerstoff und schützt damit das verpackte Produkt vor Oxidation.

Das hydrophile Polymer umfasst vorzugsweise ein Polymer auf Basis eines Polyvinylalkohols. Als geeignete Polymere sind insbesondere Polymere auf Basis von Vinylalkohol oder Copolymere aus Ethylen und Vinylalkoholen zu nennen.

Geeignete Polymere sind insbesondere unter den Handelsnamen Exceval AQ 4104, Exceval HR 3010, Sealcoat HS 25 und MichemFlexB 1001 bekannt.

Das mindestens eine hydrophile Polymer ist in der zweiten Barriereschicht vorzugsweise in einer Menge von 1 bis 100 Gew.-%, besonders bevorzugt von 50 bis 99,5 Gew.-% oder 50 bis 100 Gew.-%, bezogen auf das Gesamtgewicht der zweiten Barriereschicht, enthalten.

Bevorzugt ist die zweite Barriereschicht als Ganzes hydrophil.

Die zweite Barriereschicht kann ferner Additive, wie Verdicker, z.B. acrylatbasierte Verdicker, Tenside, z.B. Sulfosuccinate, Dehnrheologiehilfsmittel, z.B. acrylatbasierte Dehnrheologiehilfsmittel, und/oder Vernetzungsmittel, wie Aldehyde und mehrwertige Aldehyde, Zirconate, mehrwertige Epoxide, Epichlorhydrinharze und/oder Hydrazide, enthalten.

Diese Additive sind vorzugsweise jeweils in einer Menge von 0,1 bis 1 Gew.-%, bezogen auf das Gesamtgewicht der zweiten Barriereschicht, enthalten.

Die Auftragsmenge der zweiten Barriereschicht beträgt vorzugsweise 1 bis 20 g/m$^2$ und besonders bevorzugt 1 bis 10 g/m$^2$. Die Menge bezieht sich auf die getrocknete zweite Barriereschicht in dem finalen Produkt.

Die dritte Barriereschicht umfasst mindestens ein hydrophobes Polymer. Diese Barriereschicht dient vorzugsweise als Barriereschicht für Wasserdampf und schützt damit das verpackte Produkt vor dem Austrocknen.

Das in der dritten Barriereschicht enthaltene mindestens eine hydrophobe Polymer ist vorzugsweise ein thermoplastisches Polymer, so dass die Schicht dadurch siegelbar wird.

Unter "Siegeln" wird vorzugsweise das Verbinden zweier Lagen des beschichteten Papiers mittels lokaler Wärmeeinwirkung (beim "Heißsiegeln") oder mittels Ultraschall verstanden.

Das mindestens eine hydrophobe Polymer umfasst vorzugsweise ein Polymer auf Basis eines Polyacrylats und/oder eines Polyolefins. Als geeignete Polymere sind insbesondere auch Polymethylacrylate, Polymethylmethacrylate, Polyethylarylate, Polyethylmethacrylat, Poly(n-, iso-, tert.-)butylacrylate, Poly(n-, iso-, tert.-)butylmethacrylate, Polycyclohexylmethacrylate, Polyethylhexylacrylate und deren Copolymere, Pfropfpolymere, sowie Copolymere mit Styrol, Acrylnitril, Methylstyrol oder Vinyltoluol, Styrol Butadien-Copolymere), Polyvinylacetate (auch teilverseift), Polyester, Polyamide, Polyurethane, Polyether, Polyethylenimine, und/oder Polyvinylamide zu nennen.

Zusätzlich zu dem hydrophoben Polymer kann auch ein Wachs vorhanden sein. Geeignete Wachse umfassen Verbindungen wie Paraffine oder natürliche Mischungen oder Reinstoffe kurzbis mittelkettiger Kohlenwasserstoffverbindungen, die umgangssprachlich als "Wachse" bezeichnet werden. Geeignete Wachse sind z.B. Heneicosan, Docosan, Tricosan, Tetracosan, Pentacosan, Hexacosan, Heptacosan, Octacosan, Nonacosan, Triacontan, Hentriacontan, Dotriacontan, Tritriacontan, Tetratriacontan, Pentatriacontan, Hexatriacontan, Heptatriaontan, Octatriacontan, Nonatriacontan; Montanwachse, natürliche Wachse (Carnaubawachs, Bienenwachs Candelillawachs), durch Hydrierung oder Teilhydrierung von Pflanzenölen und tierischen Ölen oder Fetten hergestellte Wachse, sowie Metallseifen, wie z.B. Ca-Stearat.

Geeignete Polymere und Polymer-/Wachsgemische sind insbesondere unter den Handelsnamen Vapor Coat 1300, BimBA 8888, Cartaseal SWF, Sealcoat SL251, Rhobarr 320, B-Coat SP1, B-Coat WB 100, B-Coat 50/3, Chemipearl S300, Ultraseal W-951, Ultraseal W-952, Wükoseal 630, EurikaCoat 3624 und Epotal SP 106 bekannt.

Das mindestens eine hydrophobe Polymer ist in der dritten Barriereschicht vorzugsweise in einer Menge von 1 bis 100 Gew.-%, besonders bevorzugt von 50 bis 100 Gew.-% oder 50 bis 99,5 Gew.-%, bezogen auf das Gesamtgewicht der dritten Barriereschicht, enthalten.

Bevorzugt ist die dritte Barriereschicht als Ganzes hydrophob.

Die dritte Barriereschicht kann ferner Additive, wie Verdicker, z.B. acrylatbasierte Verdicker, Tenside, z.B. Sulfosuccinate, Dehnrheologiehilfsmittel, z.B. acrylatbasierte Dehnrheologiehilfsmittel, Wachse, wie z.B. Fettsäuren oder fettsäureamidbasierte Wachse, Additive zur Verringerung der Abriebempfindlichkeit und Erhöhung des Slips, wie Schichtsilikate, insbesondere Magnesiumsilikathydrate oder Alumosilikate und/oder Vernetzungsmittel, wie Aldehyde und mehrwertige Aldehyde, Zirconate, mehrwertige Epoxide, Epichlorhydrinharze und/oder Hydrazide enthalten.

Diese Additive sind vorzugsweise jeweils in einer Menge von 0 bis 50 Gew.-%, vorzugsweise von 0 bis 30 Gew.-%, bezogen auf das Gesamtgewicht der dritten Barriereschicht, enthalten.

Die Auftragsmenge der dritten Barriereschicht beträgt vorzugsweise 1 bis 20 g/m$^2$ und besonders bevorzugt 5 bis 10 g/m$^2$. Die Menge bezieht sich auf die getrocknete dritte Barriereschicht in dem finalen Produkt.

In einem besonderen Ausführungsfall, wenn das Verpackungsgut neben Wasser auch Fette enthält, sollte die dritte Barriereschicht keine niedermolekularen, fettlöslichen Bestandteile enthalten, abgesehen von Kleinstmengen, die für den Kontakt mit fettigen Lebensmitteln zugelassen sind. Damit sind Wachse zur Verbesserung der Wasserdampfbarriere weitgehend ausgeschlossen und man muss auf Polymersysteme zurückgreifen, die auch ohne Wachse akzeptable Wasserdampfbarrieren ausbilden und im Idealfall heißsiegelbar sind. Hierzu eignen sich z. B. Copolymere unpolarer Monomere wie Ethlen mit Acrylsäure und anderen ethylenisch ungesättigen Carbonsäuren, die neben der Wasserdampfbarriere auch eine gewisse Fettbarriere besitzen. Bekannte Produkte sind z. B. Cartaseal SWF, Wükoseal 630 und Sealcoat SL 251. Die 1. Barriereschichs kann dennoch Wachse enthalten, da die zweite Barriereschicht mit ihrer Funktion als Sauerstoff-, Fett-, und Mineralölbarriere auch eine hervorragende Barriere gegen Wachse bildet, die in der Regel einen stark unpolaren Charakter besitzen.

Erfindungsgemäß liegt zwischen dem Basispapier und der ersten Barriereschicht ein Vorstrich, umfassend mindestens ein anorganisches Pigment und ein polymeres Bindemittel, vor.

Das anorganische Pigment umfasst insbesondere ein Silikat, vorzugsweise ein Schichtsilikat und ganz besonders bevorzugt ein Kaolin.

Das polymere Bindemittel umfasst vorzugsweise ein polymeres Bindemittel auf Basis eines Polyacrylats.

Als geeignete polymere Bindemittel sind insbesondere Acrylat-basierte oder Styrol-/Butadien-basierte Bindemittel zu nennen. Prinzipiell sind alle Polymere, die als Bindemittel für Pigmentstriche in der Papierindustrie verwendet werden können, geeignet. Auch Bindemittel auf Stärkebasis sind möglich.

Geeignete polymere Bindemittel sind insbesondere unter den Handelsnamen Acronal 305S, Ligos K 4079, Acronal S 728, XZ94346.01, XZ94346.00 bekannt.

Der Vorstrich enthält vorzugsweise 1 bis 70 Gew.-%, bevorzugt 5 bis 50 Gew.-%, polymeres Bindemittel. Die Menge bezieht sich auf den getrockneten Vorstrich in dem finalen Produkt.

Der Vorstrich enthält ferner vorzugsweise 50 bis 95 Gew.-%, bevorzugt 80 bis 90 Gew.-%, anorganisches Pigment. Die Menge bezieht sich auf den getrockneten Vorstrich in dem finalen Produkt.

Zudem kann der Vorstrich Additive, wie Verdicker, z.B. Acrylat-basierte Verdicker, Tenside und/oder Rheologiemodifikatoren enthalten. Auch der Einsatz von Vernetzern ist denkbar. Bevorzugt enthält der Vorstrich einen Zirkoniumbasierten Vernetzer und ist selbst mit Formaldehyd vernetzt.

Diese Additive sind vorzugsweise jeweils in einer Menge von 0 bis 2 Gew.-% enthalten. Die Menge bezieht sich auf den getrockneten Vorstrich in dem finalen Produkt.

Die Auftragsmenge des Vorstrichs beträgt vorzugsweise 1 bis 10 g/m$^2$ und besonders bevorzugt 2 bis 6 g/m$^2$. Die Menge bezieht sich auf den getrockneten Vorstrich in dem finalen Produkt.

Wird ein solcher Vorstrich (auch Primer genannt), aufgetragen, so hat dies den Vorteil, dass die Papieroberfläche verschlossen wird und die weiteren darauf gestrichenen Barriereschichten nicht in das Papier migrieren. Des Weiteren verringert dieser Vorstrich die mittlere Rautiefe des Basispapiers und bietet einen vorteilhaften holdout, der sich durch einen flächendeckenden Auftrag und eine definierte Oberflächenenergie auszeichnet, so dass sich eine aufgestrichene Barriereschicht optimal ausbilden kann. Außerdem vermittelt der Vorstrich die Lagenhaftung zwischen Basispapier und den Barriereschichten, was für spätere Siegelanwendungen von Bedeutung sein kann.

Das beschichtete Papier ist in einer weiteren bevorzugten Ausführungsform dadurch gekennzeichnet, dass auf der dritten Barriereschicht eine Siegelschicht, umfassend mindestens ein thermoplastisches Polymer, vorhanden ist.

Eine solche Siegelschicht ist insbesondere dann sinnvoll, wenn das mindestens eine hydrophobe Polymer in der dritten Barriereschicht kein thermoplastisches Polymer umfasst, also nicht heißsiegelbar ist.

Die Siegelschicht umfasst bevorzugt ein thermoplastisches Polymer auf Basis eines Polyacrylats, eines Styrol-/Butadien-Copolymers und/oder eines Polyolefins.

Als geeignete Polymere sind insbesondere auch Acrylate, Polymethacrylate, Polymethylacrylate, Polymethylmethacrylate, Polyethylarylate, Polyethylmethacrylate, Poly(n-, iso-, tert.-)butylacrylate, Poly(n-, iso-, tert.-)butylmethacrylate, Polycyclohexylmethacrylate, Polyethylhexylacrylate und deren Copolymere, Pfropfpolymere, sowie Copolymere mit Styrol, Acrylnitril, Methylstyrol und/oder Vinyltoluol zu nennen.

Geeignete Polymere sind insbesondere unter den Handelsnamen Vapor Coat 1300, BimBA 8888, Cartaseal SWF, Rhobarr 320, B-Coat WB 100, B-Coat 50/3, Chemipearl S300, Ultraseal W-952, Wükoseal 630, EurikaCoat 3624, Epotal SP 106, Hypod 2000, Extomine BS-OF 40%, Aquaseal X2200, Cartaseal SCR, CHT Coat 8080, Sealcoat MB46HE und Extomine BG-EM 48% bekannt.

Das mindestens eine thermoplastische Polymer in der Siegelschicht ist vorzugsweise in einer Menge von 1 bis 100 Gew.-%, besonders bevorzugt von 70 bis 100 Gew.-% oder von 70 bis 99,5 Gew.-%, bezogen auf das Gesamtgewicht der Siegelschicht, enthalten.

Die Siegelschicht kann ferner Additive, wie Verdicker, z.B. acrylatbasierte Verdicker, Tenside, z.B. Sulfosuccinate, Dehnrheologiehilfsmittel, z.B. acrylatbasierte Dehnrheologiehilfsmittel, Wachse, Additive zur Verringerung der Abriebempfindlichkeit und Erhöhung des Slips, wie Schichtsilikate, insbesondere Magnesiumsilikathydrate oder Alumosilikate und/oder Vernetzungsmittel, enthalten.

Diese Additive sind vorzugsweise jeweils in einer Menge von 0 bis 50 Gew.-%, bevorzugt von 0 bis 30 Gew.-%, bezogen auf das Gesamtgewicht der Siegelschicht, enthalten.

Die Auftragsmenge der Siegelschicht beträgt vorzugsweise 1 bis 10 g/m$^2$ und besonders bevorzugt 1 bis 5 g/m$^2$. Die Menge bezieht sich auf die getrocknete Siegelschicht in dem finalen Produkt.

Im Folgenden werden Ausführungsbeispiele der Erfindung anhand einer Zeichnung näher erläutert. Im Einzelnen zeigen:

Fig. 1     einen Ausschnitt aus dem bei der Erfindung verwendeten, beschichteten Papier,

Fig. 2     eine erste Ausführungsform einer erfindungsgemäßen Verpackung,

Fig. 3     eine zweite Ausführungsform einer erfindungsgemäßen Verpackung,

Fig. 4     eine dritte Ausführungsform einer erfindungsgemäßen Verpackung und

Fig. 5     eine vierte Ausführungsform einer erfindungsgemäßen Verpackung.

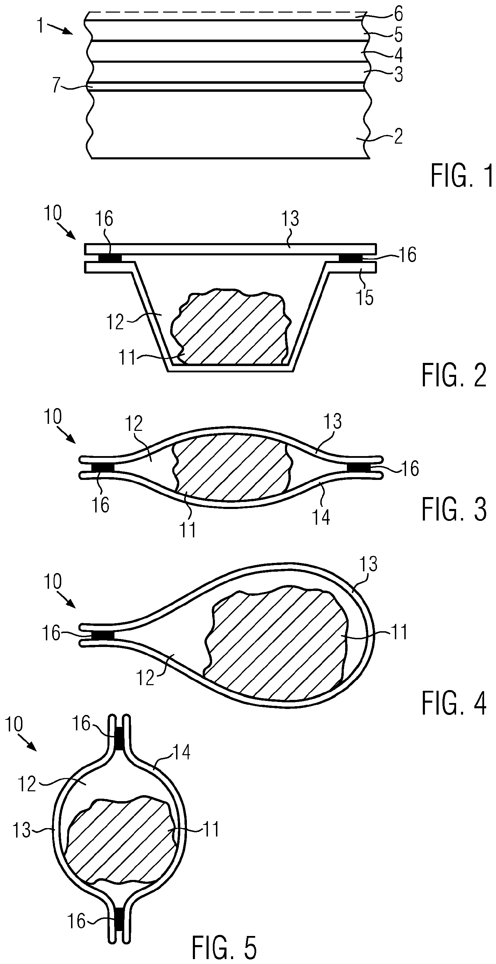

Fig. 1 zeigt den Querschnitt eines Ausschnittes eines bei der Erfindung eingesetzten, beschichteten Papiers 1. Das Papier 1 umfasst ein Basispapier 2, beispielsweise Papiermaterial mit einem Flächengewicht von 20 - 120 g/m$^2$, oder auch stärkeres Papiermaterial wie Pappe oder Karton. Auf dem Basispapier sind übereinander zumindest drei verschiedene Beschichtungen vorgesehen, und zwar - ausgehend von dem Basispapier 2 - in dieser Reihenfolge eine erste Barriereschicht 3, eine zweite Barriereschicht 4 und eine dritte Barriereschicht 5. Dabei umfasst die erste Barriereschicht 3 mindestens ein hydrophobes Polymer, während die zweite Barriereschicht 4 mindestens ein hydrophiles Polymer aufweist und die dritte Barriereschicht 5 wieder mindestens ein hydrophobes Polymer umfasst. Als Option deutet Fig. 1 an, dass auf der dritten Barriereschicht 5 zusätzlich eine Siegelschicht 6 vorgesehen sein kann, die unter Einfluss von Druck und/oder Wärme aufschmelzbar ist und insbesondere mindestens ein thermoplastisches Polymer aufweisen kann. Ebenfalls optional ist zwischen dem Basispapier 2 und der ersten Barriereschicht 3 ein Vorstrich 7 vorhanden, der ein anorganisches Pigment und ein polymeres Bindemittel umfassen kann.

Fig. 2 zeigt ein erstes Ausführungsbeispiel einer erfindungsgemäßen Verpackung 10 im Horizontalschnitt. Ein Produkt 11, beispielsweise ein verderbliches Lebensmittel, ist in einem Innenraum 12 der Verpackung 10 aufgenommen.

Die Verpackung 10 weist ein erstes Verpackungsmaterialstück 13 auf, das in diesem Ausführungsbeispiel den Deckel der Verpackung 10 bildet. Das erste Verpackungsmaterialstück 13 umfasst ein bzw. besteht aus einem beschichteten Papier 1 entsprechend Fig. 1. Die Seite des beschichteten Papiers 1, auf der das Basispapier 2 liegt, ist vom Innenraum 12 der Verpackung 10 abgewandt.

Die Verpackung 10 weist ferner ein zweites Verpackungsmaterialstück 14 auf. Beim zweiten Verpackungsmaterialstück 14 kann es sich um eine tiefgezogene Schale aus einem Kunststoffmaterial handeln.

Das erste und das zweite Verpackungsmaterialstück 13, 14 sind über eine entlang eines Randes 15 der Verpackung 10 verlaufenden Siegelnaht 16 miteinander verbunden. Die Siegelnaht 16 ist umlaufend und gasdicht, so dass auch die Verpackung 10 insgesamt gasdicht (d. h. hermetisch) geschlossen ist.

Der Innenraum 12 der Verpackung 10 kann entweder evakuiert sein oder mit einem Austauschgas (bzw. Austauschgasgemisch) begast sein, so dass ein Sauerstoffgehalt einer Atmosphäre im Innenraum 12 entweder unter 3 % oder aber über 60 % beträgt.

Fig. 3 zeigt ein zweites Ausführungsbeispiel einer erfindungsgemäßen Verpackung 10. Diese Verpackung 10 weist wiederum ein erstes Verpackungsmaterialstück 13 und ein zweites Verpackungsmaterialstück 14 auf, die mittels einer Siegelnaht 16 miteinander versiegelt sind. Damit ist die Verpackung 10 gasdicht verschlossen. Bei mindestens einem der beiden Verpackungsmaterialstücke 13, 14 handelt es sich um ein beschichtetes Papier 1. Auch hier kann -wie bereits beim Ausführungsbeispiel nach Fig. 2 - ein Sauerstoffgehalt im Innenraum 12 der Verpackung 10 entweder unter 3 % oder aber über 60 % betragen.

Fig. 4 zeigt ein drittes Ausführungsbeispiel einer erfindungsgemäßen Verpackung 10 - hier in Form eines Beutels, wie er beispielsweise auf einer Kammer-Verpackungsmaschine oder einer Kammer-Band-Verpackungsmaschine herstellbar ist. Die Verpackung 10 gemäß Fig. 4 ist aus einem einzigen Verpackungsmaterialstück 13 hergestellt, das auf sich selbst zurückgefaltet ist, so dass die dritte Barriereschicht 5 bzw. die Siegelschicht 6 auf der Innenseite liegt. Mittels einer Siegelnaht 16 am Hals des Beutels ist die Verpackung 10 gasdicht verschlossen. Auch hier kann der Sauerstoffgehalt im Innenraum 12 der Verpackung 10 entweder unter 3 % oder aber über 60 % betragen.

Schließlich zeigt Fig. 5 ein viertes Ausführungsbeispiel einer erfindungsgemäßen Verpackung. Diese Form der Verpackung 10 ist beispielsweise auf einer Schlauchbeutel-Verpackungsmaschine herstellbar. Die Verpackung 10 gemäß Fig. 5 verfügt entweder über ein erstes und ein zweites Verpackungsmaterialstück 13, 14, bei dem es sich jeweils um ein beschichtetes Papier 1 entsprechend Fig. 1 handelt. Alternativ umfasst die Verpackung 10 gemäß Fig. 5 nur ein einziges, erstes Verpackungsmaterialstück 13, das auf sich selbst zurückgefaltet ist. Siegelnähte 16 sorgen für einen gasdichten Verschluss der Verpackung 10.

Das in der Verpackung verwendete beschichtete Papier könnte insbesondere folgende Merkmale aufweisen (einzeln oder kumulativ):

-     die erste Barriereschicht enthält Stoffe oder besteht daraus, die ausgewählt sind aus der Gruppe lipophile Stoffe, Paraffine, insbesondere Hartparaffine, Wachse, insbesondere mikrokristalline Wachse, Wachse auf Basis von pflanzlichen Ölen oder Fetten, Wachse auf Basis von tierischen Ölen oder Fetten, pflanzliche Wachse, tierische Wachse, niedermolekulare Polyolefine, Polyterpene und deren Mischungen.

- durch die zweite Barriereschicht der Übergang von Stoffen, insbesondere von hydrophoben Stoffen, verringert oder verhindert ist.

- der Übergang von Stoffen, insbesondere von hydrophoben Stoffen, aus der ersten Barriereschicht oder durch die erste Barriereschicht, in die dritte Barriereschicht oder darüber hinaus ist verringert oder verhindert.

- der Übergang von Stoffen, insbesondere von hydrophoben Stoffen, aus der dritten Barriereschicht oder durch die dritte Barriereschicht, in die erste Barriereschicht ist verhindert.

- der Übergang von Stoffen, die ausgewählt sind aus der Gruppe lipophile Stoffe, Paraffine, insbesondere Hartparaffine, Wachse, insbesondere mikrokristalline Wachse, Wachse auf Basis von pflanzlichen Ölen oder Fetten, Wachse auf Basis von tierischen Ölen oder Fetten, pflanzliche Wachse, tierische Wachse, niedermolekulare Polyolefine, Polyterpene und deren Mischungen, ist verringert oder verhindert.

- die dritte Barriereschicht ist bis auf unvermeidliche oder zulässige Verunreinigungen frei von Stoffen, die nicht für den direkten Lebensmittelkontakt zugelassen sind, insbesondere von Stoffen, die ausgewählt sind aus der Gruppe lipophile Stoffe, Paraffine, insbesondere Hartparaffine, Wachse, insbesondere mikrokristalline Wachse, Wachse auf Basis von pflanzlichen Ölen oder Fetten, Wachse auf Basis von tierischen Ölen oder Fetten, pflanzliche Wachse, tierische Wachse, niedermolekulare Polyolefine, Polyterpene und deren Mischungen.

Die Verpackung kann vorzugsweise zum Verpacken von Lebensmittelfetten oder öl- und/oder fetthaltigen Lebensmitteln zum Einsatz kommen.

**Patentansprüche**

1. Verpackung (10) mit mindestens einem ersten Verpackungsmaterialstück (13), wobei das erste Verpackungsmaterialstück (13) ein beschichtetes Papier (1) aufweist, welches ein Basispapier (2) und mindestens drei auf dem Basispapier (2) übereinander aufgebrachte Beschichtungen (3, 4, 5) aufweist, wobei die mindestens drei Beschichtungen (3, 4, 5) ausgehend von dem Basispapier (2) in dieser Reihenfolge eine erste Barriereschicht (3), umfassend mindestens ein hydrophobes Polymer, eine zweite Barriereschicht (4), umfassend mindestens ein hydrophiles Polymer, und eine dritte Barriereschicht (5), umfassend mindestens ein hydrophobes Polymer, aufweisen, wobei die Verpackung gasdicht geschlossen ist, **dadurch gekennzeichnet, dass** zwischen dem Basispapier (2) und der ersten Barriereschicht (3) ein Vorstrich (7), umfassend mindestens ein anorganisches Pigment und ein polymeres Bindemittel, vorhanden ist.

2. Verpackung gemäß Anspruch 1, **dadurch gekennzeichnet, dass** ein Sauerstoffgehalt einer Atmosphäre in einem Innenraum (12) der Verpackung (10) entweder unter 3% oder über 60% beträgt.

3. Verpackung gemäß Anspruch 1, **dadurch gekennzeichnet, dass** ein Sauerstoffgehalt einer Atmosphäre in einem Innenraum (12) der Verpackung (10) entweder maximal 2% oder mindestens 70% beträgt.

4. Verpackung gemäß einem der vorhergehenden Ansprüche, **dadurch gekennzeichnet, dass** die Verpackung (10) mittels mindestens einer Siegelnaht (16) gasdicht geschlossen ist.

5. Verpackung gemäß Anspruch 4, **dadurch gekennzeichnet, dass** die Verpackung (10) lediglich das erste Verpackungsmaterialstück (13) aufweist und dieses mit sich selbst versiegelt ist.

6. Verpackung gemäß Anspruch 4 oder 5, **dadurch gekennzeichnet, dass** die Verpackung (10) auf einer Schlauchbeutel-Verpackungsmaschine oder einer Kammer-Verpackungsmaschine hergestellt ist.

7. Verpackung gemäß Anspruch 4, **dadurch gekennzeichnet, dass** die Verpackung ein zweites Verpackungsmaterialstück (14) aufweist und das erste (13) und das zweite Verpackungsmaterialstück (14) miteinander versiegelt sind.

8. Verpackung gemäß Anspruch 7, **dadurch gekennzeichnet, dass** das zweite Verpackungsmaterialstück (14) ein Kunststoffmaterial aufweist, insbesondere ein tiefziehbares Kunststoffmaterial.

9. Verpackung gemäß Anspruch 7, **dadurch gekennzeichnet, dass** das zweite Verpackungsmaterialstück (14) ein beschichtetes Papier (1) aufweist, welches ein Basispapier (2) und mindestens drei auf dem Basispapier (2) übereinander aufgebrachte Beschichtungen (3, 4, 5) aufweist, wobei die mindestens drei Beschichtungen (3, 4, 5) ausgehend von dem Basispapier (2) in dieser Reihenfolge eine erste Barriereschicht (3), umfassend mindestens ein hydrophobes Polymer, eine zweite Barriereschicht (4), umfassend mindestens ein hydrophiles Polymer, und eine dritte Barriereschicht (5), umfassend mindestens ein hydrophobes Polymer, aufweisen.

10. Verpackung gemäß einem der Ansprüche 4, 7, 8 oder 9, **dadurch gekennzeichnet, dass** die Verpackung (10) auf einer Schalenversiegelungsmaschine oder einer Tiefzieh-Verpackungsmaschine hergestellt ist.

11. Verpackung gemäß einem der vorhergehenden Ansprüche, **dadurch gekennzeichnet, dass** auf der dritten Barriereschicht (5) eine Siegelschicht (6), vorzugsweise mindestens ein thermoplastisches Polymer umfassend, vorhanden ist.

12. Verpackung gemäß einem der vorhergehenden Ansprüche, **dadurch gekennzeichnet, dass** das Basispapier (2) ein Flächengewicht von 20 bis 120 g/m$^2$, vorzugsweise von 40 bis 100 g/m$^2$, aufweist.

13. Verpackung gemäß einem der vorhergehenden Ansprüche, **dadurch gekennzeichnet, dass** die erste Barriereschicht (3) mindestens ein hydrophobes Polymer auf Basis eines Polyacrylats und/oder eines Polyolefins umfasst.

14. Verpackung gemäß einem der vorhergehenden Ansprüche, **dadurch gekennzeichnet, dass** die zweite Barriereschicht (4) mindestens ein hydrophiles Polymer auf Basis eines Polyvinylalkohols umfasst.

15. Verpackung gemäß einem der vorhergehenden Ansprüche, **dadurch gekennzeichnet, dass** die dritte Barriereschicht (5) mindestens ein hydrophobes Polymer auf Basis eines Polyacrylats, eines Styrol-/Butadien-Copolymers und/oder eines Polyolefins umfasst.

## Claims

1. A packaging (10) comprising at least one first piece of packaging material (13), wherein the first piece of packaging material (13) has a coated paper (1), which has a base paper (2) and at least three coatings (3, 4, 5) applied one on top of the other on the base paper (2), wherein the at least three coatings (3, 4, 5) have in the sequence in which they are given, starting from the base paper (2), a first barrier layer (3), comprising at least one hydrophobic polymer, a second barrier layer (4), comprising at least one hydrophilic polymer, and a third barrier layer (5), comprising at least one hydrophobic polymer, wherein the packaging is closed in a gas-tight manner,
**characterised in that** a precoat (7) comprising at least one inorganic pigment and a polymeric binder is present between the base paper (2) and the first barrier layer (3).

2. The packaging according to claim 1, **characterized in that** an oxygen content in the packaging (10) interior space (12) atmosphere is either below 3% or above 60%.

3. The packaging according to claim 1, **characterized in that** an oxygen content in the packaging (10) interior space (12) atmosphere is either below 2% or above 70%.

4. The packaging according to any of the foregoing claims, **characterized in that** the packaging (10) is closed in a gas-tight manner by means of at least one seal seam (16).

5. The packaging according to claim 4, **characterized in that** the packaging (10) comprises only the first piece of packaging material (13) and this is sealed to itself.

6. The packaging according to claim 4 or 5, **characterized in that** the packaging (10) is produced on atubular bag packaging machine or a chambertype vacuum packaging machine.

7. The packaging according to claim 4, **characterized in that** the packaging comprises a second piece of packaging material (14), and the first (13) and second pieces of packaging material (14) are sealed to each other.

8. The packaging according to claim 7, **characterized in that** the second piece of packaging material (14) comprises a plastic material, in particular a thermoformable plastic material.

9. The packaging according to claim 7, **characterized in that** the second piece of packaging material (14) comprises a coated paper (1), which has a base paper (2) and at least three coatings (3, 4, 5) applied one on top of the other on the base paper (2), wherein the at least three coatings (3, 4, 5) have in the sequence in which they are given, starting from the base paper (2), a first barrier layer (3), comprising at least one hydrophobic polymer, a second barrier layer (4), comprising at least one hydrophilic polymer, and a third barrier layer (5), comprising at least one hydrophobic polymer.

10. The packaging according to any of the claims 4, 7, 8 or 9, **characterized in that** the packaging (10) is produced on a tray sealing machine or a thermoforming packaging machine.

11. The packaging according to any of the foregoing claims, **characterized in that** a sealant layer (6), preferably comprising at least one thermoplastic polymer, is present on the third barrier layer (5).

12. The packaging according to any of the foregoing claims, **characterized in that** the base paper (2) has a basis weight of from 20 to 120 g/m$^2$, preferably from 40 to 100 g/m$^2$.

13. The packaging according to any of the foregoing claims, **characterized in that** the first barrier layer (3) comprises at least one hydrophobic polymer based on a polyacrylate and/or a polyolefin.

14. The packaging according to any of the foregoing claims, **characterized in that** the second barrier layer (4) comprises at least one hydrophilic polymer based on a polyvinyl alcohol.

15. The packaging according to any of the foregoing claims, **characterized in that** the third barrier layer (5) comprises at least one hydrophobic polymer based on a polyacrylate, a styrene butadiene copolymer and/or a polyolefin.


**Revendications**

1. Emballage (10), comprenant au moins une première pièce de matériau d'emballage (13), dans lequel la première pièce de matériau d'emballage (13) présente un papier couché (1) qui présente un papier de base (2) et au moins trois revêtements (3, 4, 5) appliqués de manière superposée sur le papier de base (2), dans lequel les au moins trois revêtements (3, 4, 5) présentent, en partant du papier de base (2) et dans cet ordre, une première couche barrière (3) comprenant au moins un polymère hydrophobe, une deuxième couche barrière (4) comprenant au moins un polymère hydrophile et une troisième couche barrière (5) comprenant au moins un polymère hydrophobe, dans lequel l'emballage est fermé de manière étanche aux gaz, **caractérisé en ce que**
une couche de finition (7) comprenant au moins un pigment inorganique et un liant polymère est présente entre le papier de base (2) et la première couche barrière (3).

2. Emballage selon la revendication 1, **caractérisé en ce qu'**une teneur en oxygène d'une atmosphère située dans un espace intérieur (12) de l'emballage (10) est inférieure à 3 % ou supérieure à 60 %.

3. Emballage selon la revendication 1, **caractérisé en ce qu'**une teneur en oxygène d'une atmosphère située dans un espace intérieur (12) de l'emballage (10) est inférieure à 2% ou supérieure à 70%.

4. Emballage selon l'une quelconque des revendications précédentes, **caractérisé en ce que** l'emballage (10) est fermé de manière étanche au gaz au moyen d'au moins une suture de scellage (16).

5. Emballage selon la revendication 4, **caractérisé en ce que** l'emballage (10) ne présente que la première pièce de matériau d'emballage (13) et que celle-ci est scellée avec elle-même.

6. Emballage selon la revendication 4 ou 5, **caractérisé en ce que** l'emballage (10) est fabriqué sur une machine d'emballage à sachets tubulaires ou une machine d'emballage à cloche.

7. Emballage selon la revendication 4, **caractérisé en ce que** l'emballage présente une deuxième pièce de matériau d'emballage (14) et les première (13) et deuxième (14) pièces de matériau d'emballage sont scellées ensemble.

**8.** Emballage selon la revendication 7, **caractérisé en ce que** la deuxième pièce de matériau d'emballage (14) présente une matière plastique, en particulier une matière plastique thermoformable sous vide.

**9.** Emballage selon la revendication 7, **caractérisé en ce que** la deuxième pièce de matériau d'emballage (14) présente un papier couché (1) qui présente un papier de base (2) et au moins trois revêtements (3, 4, 5) appliqués de manière superposée sur le papier de base (2), dans lequel les au moins trois revêtements (3, 4, 5) présentent, en partant du papier de base (2) et dans cet ordre, une première couche barrière (3) comprenant au moins un polymère hydrophobe, une deuxième couche barrière (4) comprenant au moins un polymère hydrophile et une troisième couche barrière (5) comprenant au moins un polymère hydrophobe.

**10.** Emballage selon l'une quelconque des revendications 4, 7, 8 ou 9, **caractérisé en ce que** l'emballage (10) est fabriqué sur une machine de scellage de barquettes ou une machine d'emballage par thermoformage sous vide.

**11.** Emballage selon l'une quelconque des revendications précédentes, **caractérisé en ce qu'**une couche de scellage (6), comprenant de manière préférée au moins un polymère thermoplastique, est présente sur la troisième couche barrière (5).

**12.** Emballage selon l'une quelconque des revendications précédentes, **caractérisé en ce que** le papier de base (2) présente un poids surfacique compris entre 20 et 120 g/m$^2$, de manière préférée compris entre 40 et 100 g/m$^2$.

**13.** Emballage selon l'une quelconque des revendications précédentes, **caractérisé en ce que** la première couche barrière (3) comprend au moins un polymère hydrophobe à base d'un polyacrylate et/ou d'une polyoléfine.

**14.** Emballage selon l'une quelconque des revendications précédentes, **caractérisé en ce que** la deuxième couche barrière (4) comprend au moins un polymère hydrophile à base d'un alcool polyvinylique.

**15.** Emballage selon l'une quelconque des revendications précédentes, **caractérisé en ce que** la troisième couche barrière (5) comprend au moins un polymère hydrophobe à base d'un polyacrylate, d'un copolymère styrène/butadiène et/ou d'une polyoléfine.

FIG. 1

FIG. 2

FIG. 3

FIG. 4

FIG. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2018109448 A1
- DE 102016201498 A1
- EP 3278972 A1
- DE 102010021027 A1